# EUROPEAN PATENT SPECIFICATION

(11) **EP 1 462 844 B1**
(45) Date of publication and mention of the grant of the patent: **11.04.2007**
(21) Application number: 04101154.5
(22) Date of filing: 19.03.2004
(51) Int. Cl.: G02F 1/13357, G02B 6/00

(54) **Backlight illumination system and display device**
Rücklicht-Beleuchtungssystem und Anzeigevorrichtung
Système d'illumination à rétro-éclairage et dispositif d'affichage

(30) Priority: 28.03.2003 EP 03100816; 30.07.2003 EP 03102348
(43) Date of publication of application: 29.09.2004
(73) Proprietor: Lumileds Lighting U.S., LLC, San Jose, California 95131 (US)
(72) Inventor: Martynov, Youri, 5680 AK Best (NL); Sillevis Smitt, Johannes, W., H., 5680 AK Best (NL); Abrahamse, Gibbo J., 5680 AK Eindhoven (NL); Timmers, Wilhelmus A. G., c/o P.O. Box 220 5600 AE Eindhoven (NL)
(74) Representative: van der Veer, Johannis Leendert

(56) References cited:
- US-A- 5 975 728
- US-A1- 2002 071 288
- US-A1- 2002 159 002
- US-A1- 2002 167 016
- US-B2- 6 536 914

## Description

The invention relates to a backlight illumination system for illuminating a large area with light of a uniform color.

In addition, the invention relates to a display device comprising such a backlight illumination system.

When light sources of different color are used for creating a uniform illumination system, a problem of achieving good color uniformity arises. Not only the number of light emitters of each individual color must be selected properly but the light emitters must, in addition, be placed in an optimal pattern in order to avoid disturbing local color variations. The backlight illuminating system may have a special color mixing arrangement, such as, e.g., in a so-called edge-lit backlight illumination system for a liquid crystal display (LCD) device, the backlight being provided with a color mixing light guide. In another situation, the backlight illuminating system may have a relatively poor color mixing arrangement, such as, for example, in a direct backlight illuminating system. In yet another situation, the backlight illuminating system may have virtually no color mixing arrangement, such as, for example, in an edge-lit backlight illumination system for a LCD, the backlight not being provided with means for additional color mixing. Both types of backlight illumination systems require dedicated design rules. The light emitters can be light sources of essentially different color, such as, for example red (R), green (G) or blue (B) light sources. In another situation, the light emitters may comprise light sources with a color which was meant to be the same but came out slightly different due to, for example, the fabrication process variations. Examples of such a situation can be phosphor-converted light-emitting diodes (LEDs) with varied thickness of phosphor layer or multi-dice RGB white packages with varied brightness of individual dices.

In US patent application publication US 2002/0167016 a backlight illumination system for illuminating a display device is described comprising a light-emitting panel with a front wall, a rear wall and edge areas. At least one of the edge areas is light transmitting and associated with a light source. The light comprises symmetric clusters of light-emitting diodes (LEDs) having three mutually different light-emission color points, for example symmetric clusters of blue, green and red LEDs.

US Patent 6,536,914 discloses a backlight system for illuminating a display device including a light-emitting panel having a light-emission window and at least one edge surface for coupling light into the light-emitting panel. The backlight system further comprises a light mixing chamber provided with a light source. The light mixing chamber is associated with the edge surface. The light source comprises a plurality of clusters of light-emitting diodes having different light-emission wavelengths, the clusters being arranged at a pitch P with respect to each other. The ratio of the height H of the light mixing chamber to the pitch P of the clusters meets the relation 0.1≤H/P≤10, preferably 0.2≤H/P≤2.

A disadvantage of the known backlight illumination system is that the light and color distribution of the backlight illumination system is insufficiently uniform. As a result the illumination of a large area with light of a uniform color is insufficient.

The invention has for its object to eliminate the above disadvantage wholly or partly. According to the invention, a backlight illumination system of the kind mentioned in the opening paragraph for this purpose comprises:
a set of a pre-determined number (N) of light emitters arranged along a straight line with an equal number (N) of equidistant positions,
the set being divided in a plurality of subsets, each subset including at least three light emitters, each subset including light emitters with substantially the same light-emission color point, the respective subsets having light-emission color points different from each other,
characterized in that
the light emitters of each subset are assigned to respective positions so that these positions and the corresponding virtual positions of their mirror images formed by concrete or virtual reflecting surfaces at the beginning and at the end of the straight line form a set of positions wherein adjacent positions are mutually spaced at intervals which are as much as possible the same,
the light emitters being assigned to their respective positions by starting with the subset with the smallest number of light emitters, iteratively followed by assigning the light emitters of the subsets of the next smallest number of light emitters to positions which are not yet occupied.

In the description and claims of the present invention, design rules for placing light emitters in a backlight illumination system are given resulting in a light and color distribution of the light emitted by the backlight illumination system with improved uniformity. In the known backlight illumination system, the placement of the light emitters is symmetrical with respect to an imaginary plain perpendicular to the line along which the individual light emitters are placed. Such a symmetric placement of the light emitters poses a restriction on the assignment of the light emitters in the backlight illumination system resulting in a less than configuration of the light emitters in the backlight illumination system.

According to the invention, there are N positions for placing the light emitters. By way of example, a backlight illumination system comprising three kinds of light emitters is considered, i.e. red (R) light emitters, green (G) light emitters and blue (B) light emitters. (In an alternative example, four instead of three colors are taken into account: apart from red, green, and blue light emitters, a fourth type of light emitter of an additional color is employed, e.g., orange). Each of the respective colors is assigned to a subset. Hence, in the given example, the set of light emitters comprises three subsets: a first subset with a number of red light emitters, a second subset with a number of green light emitters and a third subset of blue light emitters, the total number of light emitters in the three subsets being N. The number of R, G, B light emitters used in each subset of the backlight illumination system is, inter alia, determined by the individual emission characteristics of the respective light emitters and by the desired color point of the backlight illumination system in combination with, e.g., the optical characteristics of a display device associated with the backlight illumination system. The number of members of the respective subsets can be calculated and optimized on basis of the desired optical configuration.

Suppose an outcome of such a calculation is that X red light emitters, Y green light emitters and Z blue light emitters are to be used, taking into account X + Y + Z = N. The total number N of light emitters is determined e.g. by the desired light output of the backlight illumination system, the desired dimensions of the backlight illumination system and by geometrical and/or thermal constraints imposed on the placement of the light emitters along the line.

According to the invention, the assignment of the light emitters in the set starts with the subset comprising the smallest number of light emitters. If, by way of example, X < Y < Z, the assignment of the light emitters over the set of light emitters starts with the subset of X red light emitters. The X light emitters of the subset of the red light emitters are assigned to substantially equidistant positions. "Substantially equidistant" in this respect means that the light emitters of a given subset are placed at intervals which are as much as possible the same. This may imply that the number of positions between light emitters of a subset may vary, e.g. there are five positions between the first and second light emitter, four positions between the second and third light emitter, five positions between the third and fourth light emitter, etcetera. Such a configuration is more "substantially equidistant" than a configuration wherein there are four positions between the first and second light emitter, six positions between the second and third light emitter, four positions between the third and fourth light emitter, etcetera.

As a next step, the light emitters of the subset with the next smallest number of light emitters are assigned to the set. In the given example, the Y light emitters of the subset of the green light emitters are assigned to substantially equidistant positions, taking into account not to assign light emitters of this subset to positions which are already occupied by a light emitter of the previous subset.

This process is repeated iteratively until all light emitters are assigned to all N positions in the set. Normally, the light emitters of the last subset are placed at the remaining open positions along the line. In the event the number of light emitters in a certain subset equals that of another subset (e.g. X = Y), it does not matter by which subset the assignment is started.

A disadvantage of the known backlight illumination system is that it imposes restrictions on the total number of light emitters in the whole light source and in each color subset. As a result not the entire edge of the screen can be covered with light emitters and/or their relative number is sub-optimal for a specific color point. In such a backlight illumination system the light emitters of some colors will be driven at full power while the emitters of the other colors are driven at reduced powers leading to overall lower light output of the screen compared to a light source with optimal numbers of emitters in color subsets. The backlight illumination system according to the invention has a light and color distribution which is sufficiently uniform. As a result the illumination of a large area with light of a sufficiently uniform color is obtained.

A preferred embodiment of the backlight illumination system according to the invention is characterized in that the illumination system comprises a plurality of sets of the pre-determined number of light emitters, the light emitters of each set being arranged along the straight line. Preferably, the light emitters are arranged in an identical manner in each set. In this manner, the arrangement of the light emitters is relatively easy when the assignment has been established for the first set of light emitters.

Normally, upon assigning the light emitters an additional effect has to be taken into account. At the beginning as well as at the end of the straight line, a mirroring surface may be present. This may either be a "real" mirror caused by the walls of the backlight illumination system, the walls e.g. being provided with a reflecting mirror, or a "virtual" mirror in that an additional set of light emitters is arranged along the straight line. To this end, a preferred embodiment of the backlight illumination system according to the invention is characterized in that the assignment of the light emitters of the set takes into account mirroring effects at the beginning and at the end of the straight line. This mirroring effect changes the assignment of the light emitters in the set because account is taken of the light emitters, whether "concrete" or "virtual", in sets of light emitters adjacent to the "central" set under consideration along the line. The light emitters present at the other side of the (virtual) mirror are employed to further improve the light and color distribution of the backlight illumination system according to the invention.

Under normal manufacturing conditions, not all light emitters will be sufficiently identical as compared to each other. Some light emitters will have a slightly higher or a slightly lower luminous light output than the desired or average luminous light output of the corresponding subset. Such relatively small deviations from the ideal behavior can be taken into account in the assignment of the light emitters. To this end, a preferred embodiment of the backlight illumination system according to the invention is characterized in that at least one of the subsets of light emitters comprises at least one light emitter with a luminous light output substantially lower than the average light output of light emitters in said subset, said one light emitter being assigned to an area of the line where the distance between light emitters of said subset is smaller, and vice versa.

Suppose the "substantially equidistant" placement of the light sources implies that the number of positions between the light emitters of a particular subset varies in such a way that there are four positions between the first and second light emitter as well as four positions between the fourth and the fifth light emitter while there are five position between the second and the third light emitter as well as between the third and the fourth light emitter of said subset, then a light emitter with a luminous light output slightly higher than the average light output of light emitters in said subset, is preferably positioned at the location for the third light emitter (on both sides of this third position there are five positions for light emitters of other subsets).

An alternative preferred embodiment of the backlight illumination system according to the invention is characterized in that at least one of the subsets of light emitters comprises at least a first light emitter with a luminous light output substantially higher than the average light output of light emitters in said subset and in that said subset comprising at least a second light emitter with a luminous light output substantially lower than the average light output of light emitters in said subset, said first and second light emitter being assigned to positions relatively close to each other. When two light emitters are arranged relatively close to each other, effects of a luminous light output being somewhat higher for one of said light emitters and being somewhat lower for the other of said light emitters are compensated.

Under normal manufacturing conditions, not all light emitters will be sufficiently identical as compared to each other. The color of some light emitters will slightly deviate from the desired or average color of the light emitters of the corresponding subset. Such relatively small deviations from the ideal behavior can be taken into account in the assignment of the light emitters. To this end, a preferred embodiment of the backlight illumination system according to the invention is characterized in that at least one of the subsets of light emitters comprises at least one light emitter with color tri-stimulus values differing from the average color tri-stimulus values of the light emitters in said subset, said light emitter being assigned to an area of the line where the distance between light emitters of said subset is smaller.

A favorable embodiment of the backlight illumination system of the backlight illumination system according to the invention comprises at least three subsets of light emitters, the difference in color tri-stimulus values between a first and a second subset being larger than between the other subsets, the light emitters of said first and second subsets being arranged relatively close to each other.

For manufacturing purposes, the light emitters are preferably placed on a substrate provided with pre-determined and equidistant positions for the assignment. Nevertheless, according to the invention, the light emitters may be arranged at positions which are not equidistant. This enables more freedom for the assignment of the light emitters.

The invention also relates to a display device comprising a backlight illumination system as described hereinabove. Preferably, the display device comprises a liquid crystal display.

These and other aspects of the invention are apparent from and will be elucidated with reference to the embodiments described hereinafter.

In the drawings:
Figure 1 is a cross-sectional view of a display device comprising an embodiment of the backlight illumination system according to the invention;
Figure 2 shows an embodiment of the backlight illumination system according to the invention with an arrangement for a set of seventeen light emitters;
Figure 3A shows a favorable placement of the light emitters of the subset with the smallest number of light emitters according to the invention;
Figure 3B shows a less favorable placement of the light emitters of the subset with the smallest number of light emitters according to the invention;
Figure 4 shows a favorable placement of the light emitters of the subset with the next smallest number of light emitters, starting from the assignment of the light emitters in Figure 3A, and
Figure 5 shows five embodiments of the backlight illumination systems according to the invention.

The Figures are purely diagrammatic and not drawn to scale. Notably, some dimensions are shown in a strongly exaggerated form for the sake of clarity. Similar components in the Figures are denoted as much as possible by the same reference numerals.

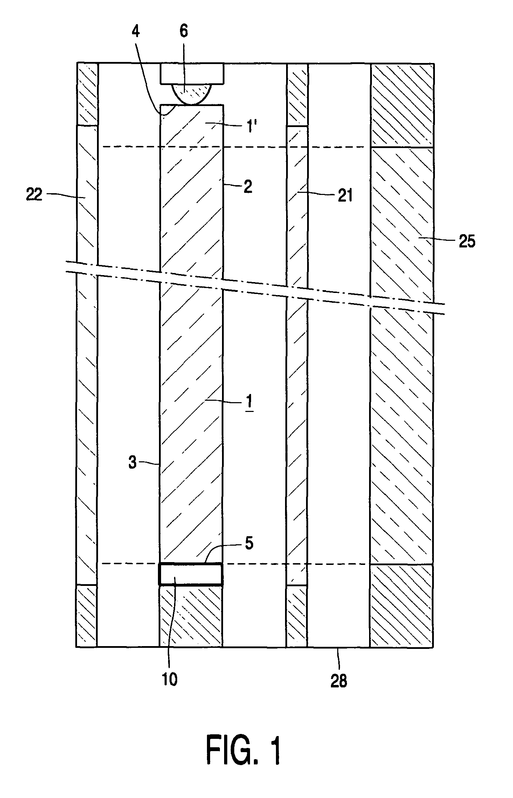

Figure 1 schematically shows a cross-sectional view of an embodiment of a backlight illumination system in accordance with the invention. The illumination system comprises a light-emitting panel 1 of a light-transmitting material. The panel 1 is made from, for example, a synthetic resin, acryl, polycarbonate, PPMA, such as Perspex, or glass. In operation, light is transported through the panel 1 under the influence of total internal reflection. The panel 1 has a front wall 2 and a rear wall 3 opposite said front wall. Between the front wall 2 and the rear wall 3, there are edge areas 4, 5. In the example shown in Figure 1, the edge area referenced 4 is light-transmitting, and at least one light emitter 6 is associated therewith. In operation, light originating from the light emitter 6 is incident on the light-transmitting edge area 4 and diffuses in the panel 1. In an alternative embodiment of the illumination system, also the edge area referenced 5 is light transmitting and a further light emitter is associated therewith.

In operation, the light-emitting panel 1 emits light in the direction of a display device, for example a liquid crystal display (LCD) device 25. For this purpose, the rear wall 3 of the light-emitting panel 1 is provided with means (not shown in Figure 1) for coupling light out of the light-emitting panel 1. These means comprise (patterns of) deformations and include, for example, screen printed dots, wedges and/or ridges. The means are provided in the rear wall of the panel 1 by means of, for example, printing, pressing, etching, scribing or sandblasting. In an alternative embodiment, the deformations are (also) provided in the front wall of the light-emitting panel. The means couple light out of the light-emitting panel 1 by reflection, scattering and/or refraction. The means for coupling out light are generally non-uniformly distributed over the rear wall of the relevant light-emitting panel, i.e. they are provided at a predetermined gradient allowing light to be coupled out of the relevant illumination system as uniformly as possible.

The means for coupling out light serve as a secondary light source. A specific optical system may be associated with said secondary light source, which optical system is provided, for example, on the rear wall 2 (not shown in Figure 1). The optical system may be used, for example, to produce a broad light beam.

In the example of Figure 1, the light emitter 6 comprises a plurality of light-emitting diodes (LEDs). In general, the source brightness of LEDs is many times that of fluorescent tubes. In addition, when use is made of LEDs, the efficiency with which light is coupled into the panel is higher than in the case of fluorescent tubes. The use of LEDs as a light emitter has the advantage that the LEDs may contact panels made of a synthetic resin material. LEDs hardly emit heat in the direction of the light-emitting panel 1 and do not emit detrimental (UV) radiation. The use of LEDs has the additional advantage that means for coupling light originating from the LEDs into the panel can be dispensed with. The application of LEDs preferably leads to a more compact illumination system.

In Figure 1, an optional (polarizing) diffuser 21 and a reflecting diffuser 22 are shown which bring about further mixing of the light originating from the light-emitting panel 1. Figure 1 further shows, very diagrammatically, a display device, preferably a LCD panel 25. The assembly of the light-emitting panel 1, the light emitter 6, the diffuser 21, the display device 25 and a housing 28 forms a display device for displaying, for example, (video) images.

In Figure 1, the light-emitting panel 1 is further provided with a sensor 10 for measuring the optical properties of the light which, in operation, is emitted by the light emitter 6. This sensor 10 is provided adjacent the edge area and is coupled to control electronics (not shown in Figure 1) for suitably adapting the luminous flux of the light emitter 6. By means of the sensor 10 and the control electronics, a feedback mechanism can be formed which is used to influence the quality and the quantity of the light coupled out of the light-emitting panel 1.

In the example shown in Figure 1, the LEDs contact the light-transmitting edge area 4. The first part of the light-emitting panel 1, referenced 1', is used to mix the light originating from the LEDs. Preferably, each one of the light-emitting diodes has a luminous flux of at least 5 1m. LEDs having such a high output are also referred to as LED power packages. The use of such high-efficiency, high-output LEDs has the specific advantage that, at a desired, comparatively high light output, the number of LEDs may be comparatively small. This has a positive effect on the compactness and the efficiency of the illumination system to be manufactured. The use of LEDs has the further advantage that dynamic illumination possibilities are obtained. If different types of LEDs are combined and/or LEDs of different colors are employed, it is possible to mix colors in a desirable manner, for example, to enable the illumination system to emit white light of the desired color temperature. In addition, color changes can be brought about irrespective of the condition of the display device.

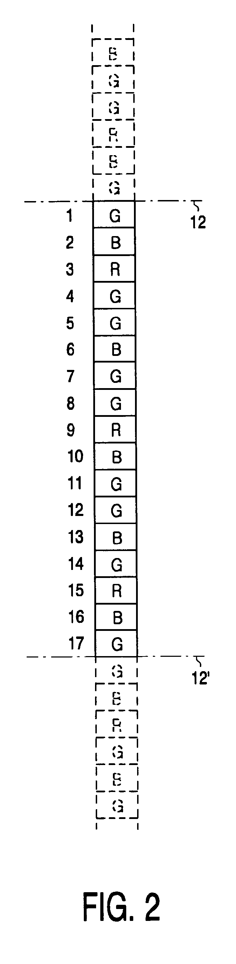

Figure 2 shows an embodiment of the backlight illumination system according to the invention with an arrangement for a set of seventeen light emitters (N=17). The dotted positions in Figure 2 show adjacent sets of (dotted) light emitters which either are real of virtual. These adjacent sets are either caused by mirroring effects of the central set of light emitters (positions indicated by the numbers 1-17) or by the presence of additional sets of light emitters. The (virtual) mirroring planes are indicated by the dash-dotted lines 12, 12'). The assignment of the light emitters (R, G, B) to positions in the set is according to the design rules as presented in the description and claims of this invention. In the example of Figure 2 it can be seen that the set of seventeen light emitters is not symmetrical.

In the example of Figure 2, the backlight illumination system comprises three kinds of light emitters is considered, i.e. red (R) light emitters, green (G) light emitters and blue (B) light emitters. Each of the respective colors is assigned to a subset. The set of light emitters comprises three subsets: a first subset with a number of red light emitters, a second subset with a number of green light emitters and a third subset of blue light emitters, the total number of light emitters in the three subsets being N. The number of R, G, B light emitters used in each subset of the backlight illumination system is, inter alia, determined by the individual emission characteristics of the respective light emitters (e.g. the light output and the tri-stimulus values of the light emitters of the respective subsets) and by the desired color point of the backlight illumination system in combination with, e.g., the optical characteristics of a display device associated with the backlight illumination system (e.g. the typical absorption characteristics of the R, G, and B-pixels of an LCD device). The number of members of the respective subsets can be calculated and optimized on basis of the desired optical configuration.

Suppose the outcome of such a calculation is that 3 red light emitters, 9 green light emitters and 5 blue light emitters are to be used (3+9+5=17). The total number of seventeen light emitters is determined e.g. by the desired light output of the backlight illumination system, the desired dimensions of the backlight illumination system and by geometrical and/or thermal constraints imposed on the placement of the light emitters along the line.

According to the invention, the assignment of the light emitters in the set starts with the subset comprising the smallest number of light emitters. In this case the subset with the red light emitters comprises only three light emitters. Accordingly, the 3 light emitters of the subset of the red light emitters are assigned to substantially equidistant positions.

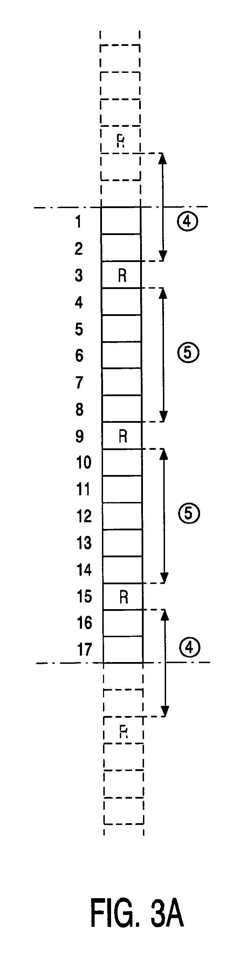

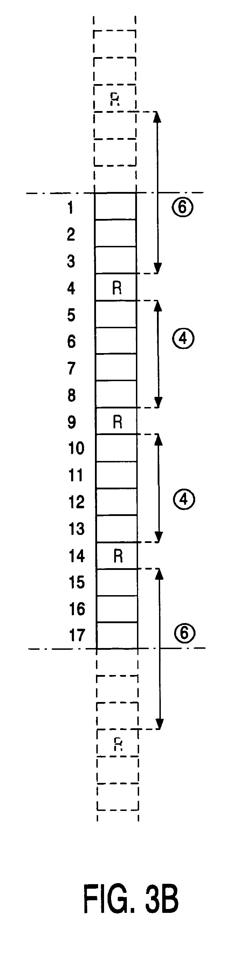

Figure 3A shows a favorable placement of the light emitters of the subset with the smallest number of light emitters. Figure 3B shows a less favorable placement of the light emitters of the subset with the smallest number of light emitters. In the examples of Figure 3A and 3B mirroring effects are taken into account at the beginning and at the end of the straight line.

In the examples of Figure 3A and 3B it can be seen that the light emitters of the subset with the smallest number of light emitters can not be placed perfectly equidistant. In the example of Figure 3A the number of open positions between the red light emitters varies between four and five (indicated by the numbers placed in circles). In the example of Figure 3B the number of open positions between the red light emitters varies between four and six (indicated by the numbers placed in circles). Without taking into account the mirroring effect, it may not be apparent which of the configurations shown in Figure 3A or Figure 3B is preferred. By taking into account the "dotted" light emitters in the adjacent sets of light emitters reveals that the assignment of the light emitters in Figure 3A is more favorable than that in Figure 3B. In the situation of Figure 3A the light emitters are assigned more "substantially equidistant" than in Figure 3B.

Under normal manufacturing conditions, not all light emitters in a subset will be sufficiently identical as compared to each other. Some light emitters will have a slightly higher or a slightly lower luminous light output than the desired or average luminous light output of the corresponding subset. Such relatively small deviations from the ideal behavior can readily be taken into account in the assignment of the light emitters. If one light emitter of the subset has a luminous light output substantially higher than the average light output of light emitters in said subset, said light emitter is, preferably, assigned to an area of the line where the distance between the light emitters of said subset is larger. In the example of Figure 3A a red light emitter with a higher than average light output is, preferably, placed at the center position (i.e. position 9).

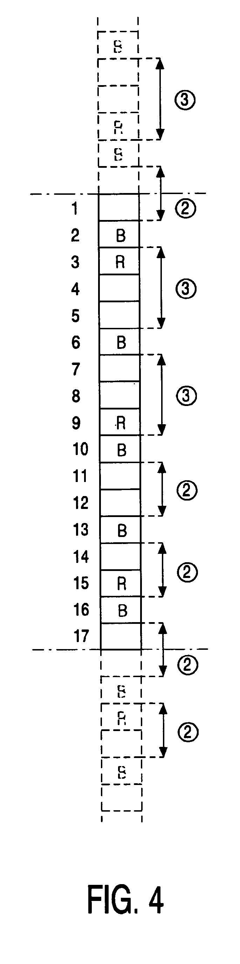

When the light emitters of the subset with the smallest number of light emitters have been place, as a next step, the light emitters of the subset with the next smallest number of light emitters are assigned to the set. In the given example, the 5 light emitters of the subset of the blue light emitters are assigned to substantially equidistant positions, taking into account not to assign light emitters of this blue subset to positions which are already occupied by a light emitter of the previous (red) subset. Starting from the assignment of the three red light emitters in Figure 3A, Figure 4 shows a favorable placement of the five light emitters of the subset with the next smallest number of light emitters. In the examples of Figure 4 mirroring effects are taken into account at the beginning and at the end of the straight line.

In the example of Figure 4 it can be seen that the light emitters of the subset with the next smallest number of light emitters can not be placed perfectly equidistant. If the red light emitters were not present, the center position of the line (position 9) would be very suitable. However, this position is already occupied by a red light emitter. In the example of Figure 4 the "center" blue light emitter was assigned to position 10. In an alternative embodiment, the "center" blue light emitter can be assigned to position 8, leading to similar results.

In the example of Figure 4 the number of open positions between the blue light emitters varies between two and three (indicated by the numbers placed in circles). By taking into account the "dotted" blue light emitters in the adjacent sets of light emitters gives the assignment of the blue light emitters as shown in Figure 4. In the situation of Figure 4 the blue light emitters are assigned "substantially equidistant" although the pattern at first sight seems relatively irregular.

If one of the light emitters of the subset under consideration would comprise at least one light emitter with a luminous light output substantially higher than the average light output of light emitters in said subset and that said subset would comprise at least a second light emitter with a luminous light output substantially lower than the average light output of light emitters in said subset, said first and second light emitter would, preferably, be assigned to positions relatively close to each other. In the example of Figure 4 a blue light emitter with a relatively high light output and a blue emitter with a relatively low light output are, preferably, assigned to positions 10 and 13 or to positions 13 and 16.

Normally the assignment process is repeated iteratively until all light emitters are assigned to all N positions in the set. In the example of Figure 4, only the green light emitters are not yet assigned. The light emitters of the subset with the largest number of light emitters are assigned to the remaining open positions along the line. In this manner the situation as shown in Figure 2 is obtained.

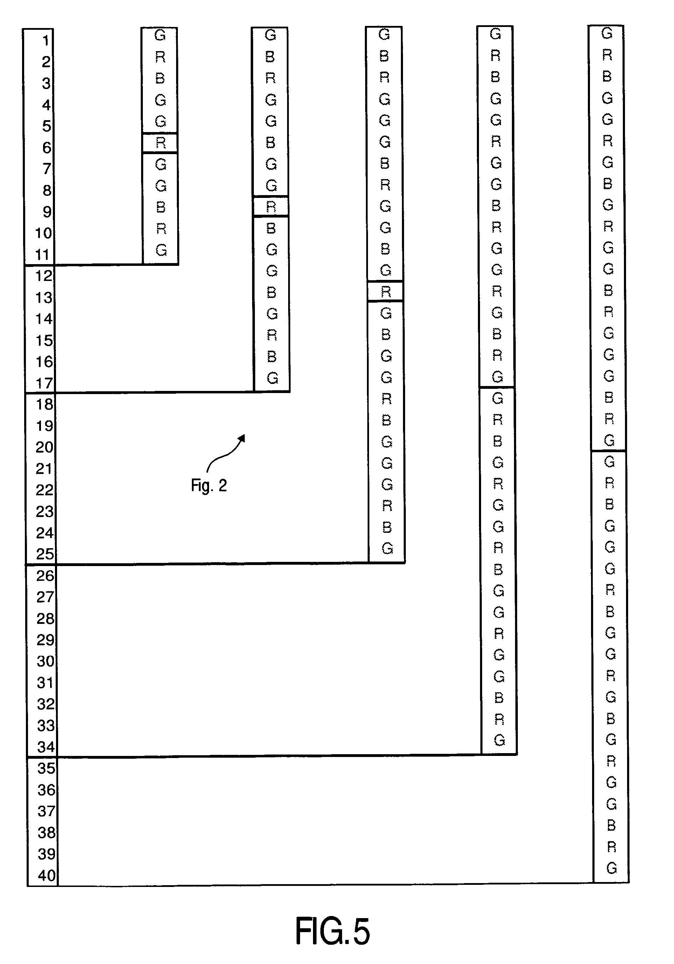

Figure 5 shows five embodiments of the backlight illumination systems according to the invention. In the embodiments of Figure 5 mirroring effects are taken into account at the beginning and at the end of the set of light emitters.

The first embodiment in Figure 5 comprises a set of eleven light emitters. Given the three types of light emitters employed: three red, six green and two blue light emitters have been assigned, starting with the blue light emitters assigned to positions 3 and 9, followed by the three red emitters assigned to positions 2, 6 (center position) and 10. Finally, the six green light emitters are assigned to the remaining open positions. The set of eleven light emitters is designed such as to form a suitable edge-lit for a display device with a diagonal of 5" (≈12.7 cm) along the long side of the display or for a display device with a diagonal of 7" (≈17.8 cm) along the short side of the display. It is noted that the first embodiment in Figure 5 comprises a symmetrical assignment of the red, blue and green light emitters.

The second embodiment in Figure 5 comprises a set of seventeen light emitters. Given the three types of light emitters employed: three red, nine green and five blue light emitters have been assigned, starting with the red light emitters, followed by the blue emitters. Finally, the remaining nine green light emitters are assigned to the remaining open positions. This second embodiment is the same as shown in Figure 2 and has been build according to the assignments shown in Figure 3A and Figure 4. The set of seventeen light emitters is designed such as to form a suitable edge-lit for a display device with a diagonal of 7" (≈17.8 cm) along the long side of the display. It is noted that the second embodiment in Figure 5 comprises a asymmetrical assignment of the red, blue and green light emitters.

The third embodiment in Figure 5 comprises a set of twenty-five light emitters. Given the three types of light emitters employed: five red, fourteen green and six blue light emitters have been assigned, starting with the red light emitters, followed by the blue light emitters. Finally, the green light emitters are assigned to the remaining open positions. The set of twenty-five light emitters is designed such as to form a suitable edge-lit for a display device with a diagonal of 12" (≈30.5 cm). It is noted that the third embodiment in Figure 5 comprises a symmetrical assignment of red the light emitters. However, the assignment of the blue and green light emitters is asymmetrical.

The fourth embodiment in Figure 5 comprises a set of thirty-four light emitters. Given the three types of light emitters employed: ten red, eighteen green and six blue light emitters have been assigned, starting with the blue light emitters, followed by the red light emitters. Finally, the green light emitters are assigned to the remaining open positions. The set of thirty-four light emitters is designed such as to form a suitable edge-lit for a display device with a diagonal of 15" (≈38.1 cm). It is noted that the fourth embodiment in Figure 5 comprises a symmetrical assignment of the light emitters.

The fifth embodiment in Figure 5 comprises a set of forty light emitters. Given the three types of light emitters employed: ten red, twenty-two green and eight blue light emitters have been assigned, starting with the blue light emitters, followed by the red light emitters. Finally, the green light emitters are assigned to the remaining open positions. The set of forty light emitters is designed such as to form a suitable edge-lit for a display device with a diagonal of 18" (≈45.7 cm). It is noted that the fifth embodiment in Figure 5 comprises a symmetrical assignment of the light emitters.

The invention can also be described as follows.

A light source ("backlight illumination system") providing the illumination of a large area with the light of uniform color composed of a number of individual light emitters arranged in a straight line each emitting the light of a color different from the color of light emitted by some other light emitters in said source and distributed over the distance comparable with linear dimensions of the illuminated area. Said light source has the following characteristics:
it contains several color sets of light emitters ("subsets of light emitters"), each color set emitting light of essentially the same color (and spectrum);
the light emitters are arranged in such a way that the light emitters of the color sets containing the smallest number of light emitters are arranged essentially equidistantly over the length of the light source.

Preferably, in such a light source, the light emitters are arranged in such a way that the light emitters of the two color sets whose XYZ color tri-stimulus values differ most from each other are placed next to each other along the line. Preferably, in such a light source the light emitters are arranged in a periodic fashion, the light source being composed of small sub-sequences of light emitters, each sub-sequence containing the light emitters from all color sets ("subsets") arranged in an identical order. Said sub-sequence does not have to be symmetrical.

Preferably, some color sets contain light emitters with luminous light output substantially higher and/or lower than the average light output of the light emitters in this color set. Preferably, such light emitters with luminous light output higher and/or lower than the average light output of their respective color sets are located close to the outer ends of the light source.

Preferably, the light emitters with luminous light output higher and/or lower than the average light output of their respective color sets are located in the area where the distance between the light emitters of the color sets deviates from the average distance between the light emitters of this color set. If the local distance between the light emitters of this color set is less than average, the light emitters with lower than average luminous output are used; if the local distance between the light emitters of this color set is greater than average, the light emitters with higher than average luminous output are used.

The rules for the assignment of light emitters for a backlight illumination system can also be described as follows.

For a linear light source for a backlight system ("backlight illumination system") with a large mixing length for, e.g., an edge-lit backlight with color mixing arrangement, the LEDs ("light emitters") are not assembled in clusters. Color uniformity is achieved by selecting placing positions:

Essentially all color must be placed along a line, such that the distances between light emitters of the same color ("subset of light emitters"), is the same between all LEDs from that color. For each light emitter from a specific color (subset) that is closest to the edge, the distance to the edge of the color mixing arrangement must be the half of the distance between two light emitters of the same color. Assigning the light emitters according to this rule gives conflicts in placing LEDs in a line, since the number of locations where LEDs can be placed is discrete and limited. Thus, it is desired to have LEDs of different color in the same spot of the linear light source. Preferably, this dilemma is dealt with in the following way. First all LEDs of the least numerous color ("subset with the smallest number") are placed (substantially) equidistantly. Secondly, the LEDs of the second least color ("subset with the next smallest number") are placed. If the desired spot for placement ("position") is already taking by a LED of the least numerous color, a nearby spot must be selected. Preferably, the rule of equidistant placement is followed as closely as possible for this second color. Thirdly (or finally, depending on the number of different colors applied), the LEDs of the third least numerous color are placed, by filling up the open locations.

A light source ("backlight illumination system") that is constructed according to the above rules may still deviate from one that enables optimal color uniformity because of the discrete locations where the LEDs are placed and because deviations of the optimal locations are necessary since two LEDs of different color cannot sit on the same spot. This non-optimality is assuming that all light emitters within a color have identical color and brightness. As a consequence, over the length of the light source, there will be areas where the content of a given color is too high and there will also be areas where the content of that given color is too low. By selecting light emitters that are brighter than the average of a given color on spots within an area where it is content is too low, a more uniform light source can be achieved. The same result can also be achieved by selecting dimmer light emitters of the complementary colors. Another way to improve color uniformity is to select the color of the LEDs such that a more uniform result is achieved. The three solutions can be combined (and/or) into one approach. This approach assumes that there is enough variation in color and brightness in LED fabrication and that the color and brightness of the individual light emitters is known with certain accuracy.

For a linear light source for a backlight system ("backlight illumination system") with a short mixing length, e.g., for a direct backlight, the light emitters are preferably clustered into identical groups. However, the cluster configuration within the cluster need not be symmetrical. In particular, as a light source for the direct backlight a linear arrangement of LEDs is proposed comprising 4-LED clusters with the following color configuration: GRBG. In such a case, the light source configuration is:
GRBGGRBG... GRBG.

To further improve the color uniformity, the LEDs with the flux deviating from the average in the area's of the light source are assigned to positions where the color point would otherwise deviate from the average color point. In particular, for the above light source configuration for the direct backlight, preferably, light emitters are employed with a flux of at least 1.3 times lower than the average flux at the underlined positions in the sequence:
GRBGGRBG...GRBG.
Alternatively, light emitters are employed with a flux at least 1.3 times higher than the average flux at the underlined positions in the sequence:
GRBGGRBG... GRBG.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A backlight illumination system for illuminating a display area with light of a uniform color, the illumination system comprising:
a set of a pre-determined number (N) of light emitters (6; R, G, B) arranged along a straight line with an equal number (N) of equidistant positions,
the set being divided in a plurality of subsets, each subset including at least three light emitters, each subset including light emitters with substantially the same light-emission color point, the respective subsets having light-emission color points different from each other,
**characterized in that**
the light emitters of each subset are assigned to respective positions so that these positions and the corresponding virtual positions of their mirror images formed by concrete or virtual reflecting surfaces (12, 12') at the beginning and at the end of the straight line form a set of positions wherein adjacent positions are mutually spaced at intervals which are as much as possible the same,
the light emitters being assigned to their respective positions by starting with the subset with the smallest number of light emitters, iteratively followed by assigning the light emitters of the subsets of the next smallest number of light emitters to positions which are not yet occupied.

2. A backlight illumination system as claimed in claim 1, **characterized in that** at least one of the subsets of light emitters comprises at least one light emitter with a luminous flux substantially lower than the average light output of light emitters in said subset, said one light emitter being assigned to an area of the line where the distance between light emitters of said subset is smaller, or
**in that** at least one of the subsets of light emitters comprises at least one light emitter with a luminous flux substantially higher than the average light output of light emitters in said subset, said one light emitter being assigned to an area of the line where the distance between light emitters of said subset is larger.

3. A backlight illumination system as claimed in claim 1 or 2, **characterized in that** at least one of the subsets of light emitters comprises at least a first light emitter with a luminous flux substantially higher than the average light output of light emitters in said subset and **in that** said subset comprising at least a second light emitter with a luminous flux substantially lower than the average light output of light emitters in said subset, said first and second light emitter being assigned to positions relatively close to each other.

4. A backlight illumination system as claimed in claim 1, **characterized in that** at least one of the subsets of light emitters comprises at least one light emitter with color tri-stimulus values differing from the average color tri-stimulus values of the light emitters in said subset, said light emitter being assigned to an area of the line where the distance between light emitters of said subset is smaller.

5. A backlight illumination system as claimed in claim 1, **characterized in that** the backlight illumination system comprises at least three subsets of light emitters, the difference in color tri-stimulus values between a first and a second subset being larger than between the other subsets, the light emitters of said first and second subsets being arranged relatively close to each other.

6. A backlight illumination system as claimed in claim 1, **characterized in that** the illumination system comprises a plurality of sets of the pre-determined number (N) of light emitters, the light emitters of each set being arranged along the straight line.

7. A backlight illumination system as claimed in claim 6, **characterized in that** the light emitters are arranged in an identical manner in each set.

8. A display device comprising a backlight illumination system as claimed in claim 1.

9. A display device as claimed in claims 8, wherein said display device comprises a liquid crystal display (25).

## Patentansprüche

1. Hintergrundbeleuchtungssystem zum Beleuchten einer Anzeigefläche mit Licht einer einheitlichen Farbe, wobei das Beleuchtungssystem Folgendes umfasst:
eine Gruppe mit einer vorgegebenen Anzahl (N) von Lichtsendern (6; R, G, B), die entlang einer geraden Linie mit einer gleichen Anzahl (N) von äquidistanten Positionen angeordnet sind,
wobei die Gruppe in eine Vielzahl von Untergruppen unterteilt ist, wobei jede Untergruppe mindestens drei Lichtsender umfasst, jede Untergruppe Lichtsender mit im Wesentlichen demselben Farbort für die Lichtemission aufweist und die jeweiligen Untergruppen sich voneinander unterscheidende Farborte haben,
**dadurch gekennzeichnet, dass**
die Lichtsender jeder Untergruppe verschiedenen Positionen zugewiesen sind, damit diese Positionen und die entsprechenden virtuellen Positionen ihrer Spiegelbilder, die von konkreten oder virtuellen reflektierenden Flächen (12, 12') am Anfang und am Ende der geraden Linie gebildet werden, eine Gruppe von Positionen bilden, bei der benachbarte Positionen in möglichst denselben Abständen zueinander angeordnet sind,
die Lichtsender ihren jeweiligen Positionen zugewiesen werden, indem mit der Untergruppe mit der geringsten Anzahl von Lichtsendern begonnen wird, iterativ gefolgt von der Zuweisung der Lichtsender der Untergruppen mit der nächstkleineren Anzahl von Lichtsendern zu noch nicht besetzen Positionen.

2. Hintergrundbeleuchtungssystem nach Anspruch 1, **dadurch gekennzeichnet, dass** mindestens eine der Lichtsenderuntergruppen mindestens einen Lichtsender mit einem Lichtstrom aufweist, der wesentlich geringer als die durchschnittliche Lichtausgabe der Lichtsender in dieser Untergruppe ist, wobei dieser eine Lichtsender einem Bereich der Linie zugewiesen ist, in dem der Abstand zwischen Lichtsendern dieser Untergruppe geringer ist, oder
dass mindestens eine der Lichtsenderuntergruppen mindestens einen Lichtsender mit einem Lichtstrom aufweist, der wesentlich höher als die durchschnittliche Lichtausgabe der Lichtsender in dieser Untergruppe ist, wobei dieser eine Lichtsender einem Bereich der Linie zugewiesen ist, in dem der Abstand zwischen Lichtsendern dieser Untergruppe größer ist.

3. Hintergrundbeleuchtungssystem nach Anspruch 1 oder 2, **dadurch gekennzeichnet, dass** mindestens eine der Lichtsenderuntergruppen mindestens einen ersten Lichtsender mit einem Lichtstrom umfasst, der wesentlich höher als die durchschnittliche Lichtausgabe der Lichtsender in dieser Untergruppe ist, und **dadurch**, dass diese Untergruppe mindestens einen zweiten Lichtsender mit einem Lichtstrom umfasst, der wesentlich geringer als die durchschnittliche Lichtausgabe der Lichtsender in dieser Untergruppe ist, wobei der erste und der zweite Lichtsender Positionen zugewiesen sind, die relativ nah beieinander liegen.

4. Hintergrundbeleuchtungssystem nach Anspruch 1, **dadurch gekennzeichnet, dass** mindestens eine der Lichtsenderuntergruppen mindestens einen Lichtsender mit Farbwerten umfasst, die sich von den durchschnittlichen Farbwerten der Lichtsender dieser Untergruppe unterscheiden, wobei dieser Lichtsender einem Bereich der Linie zugewiesen ist, in dem der Abstand zwischen Lichtsendern dieser Untergruppe geringer ist.

5. Hintergrundbeleuchtungssystem nach Anspruch 1, **dadurch gekennzeichnet, dass** das Hintergrundbeleuchtungssystem mindestens drei Lichtsenderuntergruppen umfasst, wobei der Unterschied der Farbwerte zwischen einer ersten und einer zweiten Untergruppe größer als zwischen den anderen Untergruppen ist und die Lichtsender der ersten und der zweiten Untergruppe relative nah beieinander angeordnet sind.

6. Hintergrundbeleuchtungssystem nach Anspruch 1, **dadurch gekennzeichnet, dass** das Beleuchtungssystem eine Vielzahl von Gruppen der vorgegebenen Anzahl (N) von Lichtsendern umfasst, wobei die Lichtsender jeder Gruppe entlang der geraden Linie angeordnet sind.

7. Hintergrundbeleuchtungssystem nach Anspruch 6, **dadurch gekennzeichnet, dass** die Lichtsender in jeder Gruppe auf identische Weise angeordnet sind.

8. Anzeigeeinrichtung, die ein Hintergrundbeleuchtungssystem nach Anspruch 1 umfasst.

9. Anzeigeeinrichtung nach Anspruch 8, wobei die Anzeigeeinrichtung eine Flüssigkristallanzeige (25) umfasst.

## Revendications

1. Système d'éclairage à rétroéclairage destiné à éclairer une zone d'affichage avec une lumière de couleur uniforme, le système d'éclairage comprenant :
un jeu d'un nombre prédéterminé (N) d'émetteurs de lumière (6; R, G, B) agencés le long d'une ligne droite présentant un nombre égal (N) de positions équidistantes,
le jeu étant divisé en une pluralité de sous-jeux, chaque sous-jeu incluant au moins trois émetteurs de lumière, chaque sous-jeu incluant des émetteurs de lumière présentant sensiblement le même point de couleur électroluminescent, les sous-jeux respectifs présentant des points de couleur électroluminescents différents les uns des autres,
**caractérisé en ce que**
les émetteurs de lumière de chaque sous-jeu sont attribués sur des positions respectives, de telle sorte que ces positions et les positions virtuelles correspondantes de leurs images inverses formées par des surfaces réfléchissantes réelles ou virtuelles (12, 12') au début et à la fin de la ligne droite forment un jeu de positions pour lesquelles des positions adjacentes sont espacées les unes des autres avec des intervalles qui sont autant que possible identiques,
les émetteurs de lumière étant attribués sur leurs positions respectives en commençant par le sous-jeu présentant le nombre le plus petit d'émetteurs de lumière, ceci étant suivi de manière itérative par l'attribution des émetteurs de lumière des sous-jeux présentant le nombre suivant le plus petit d'émetteurs de lumière sur des positions qui ne sont pas encore occupées.

2. Système d'éclairage à rétroéclairage suivant la revendication 1, **caractérisé en ce qu'**au moins un des sous-jeux d'émetteurs de lumière comprend au moins un émetteur de lumière présentant un flux lumineux sensiblement inférieur au rendement lumineux moyen d'émetteurs de lumière dans ledit sous-jeu, ledit un émetteur de lumière étant attribué à une zone de la ligne où la distance entre les émetteurs de lumière dudit sous-jeu est inférieure, ou
**en ce qu'**au moins un des sous-jeux d'émetteurs de lumière comprend au moins un émetteur de lumière présentant un flux lumineux sensiblement supérieur au rendement lumineux moyen d'émetteurs de lumière dans ledit sous-jeu, ledit un émetteur de lumière étant attribué à une zone de la ligne où la distance entre les émetteurs de lumière dudit sous-jeu est supérieure.

3. Système d'éclairage à rétroéclairage suivant la revendication 1 ou 2, **caractérisé en ce qu'**au moins un des sous-jeux d'émetteurs de lumière comprend au moins un premier émetteur de lumière présentant un flux lumineux sensiblement supérieur au rendement lumineux moyen d'émetteurs de lumière dans ledit sous-jeu, et **en ce que** ledit sous-jeu comprend au moins un deuxième émetteur de lumière présentant un flux lumineux sensiblement inférieur au rendement lumineux moyen d'émetteurs de lumière dans ledit sous-jeu, lesdits premier et deuxième émetteurs de lumière étant attribués sur des positions relativement proches l'une de l'autre.

4. Système d'éclairage à rétroéclairage suivant la revendication 1, **caractérisé en ce qu'**au moins un des sous-jeux d'émetteurs de lumière comprend au moins un émetteur de lumière présentant des composantes trichromatiques de couleur différentes des composantes trichromatiques de couleur moyennes des émetteurs de lumière dans ledit sous-jeu, ledit émetteur de lumière étant attribué sur une zone de la ligne où la distance entre les émetteurs de lumière dudit sous-jeu est inférieure.

5. Système d'éclairage à rétroéclairage suivant la revendication 1, **caractérisé en ce que** le système d'éclairage à rétroéclairage comprend au moins trois sous-jeux d'émetteurs de lumière, la différence pour les composantes trichromatiques de couleur entre un premier et un deuxième sous-jeu étant supérieure à celle entre les autres sous-jeux, les émetteurs de lumière desdits premier et deuxième sous-jeux étant agencés de manière à être relativement proches les uns des autres.

6. Système d'éclairage à rétroéclairage suivant la revendication 1, **caractérisé en ce que** le système d'éclairage comprend une pluralité de jeux du nombre prédéterminé (N) d'émetteurs de lumière, les émetteurs de lumière de chaque jeu étant agencés le long d'une ligne droite.

7. Système d'éclairage à rétroéclairage suivant la revendication 6, **caractérisé en ce que** les émetteurs de lumière sont agencés d'une manière identique dans chaque jeu.

8. Dispositif d'affichage comprenant un système d'éclairage à rétroéclairage suivant la revendication 1.

9. Dispositif d'affichage suivant la revendication 8, dans lequel ledit dispositif d'affichage comprend un affichage à cristaux liquides (25).
